# EUROPEAN PATENT SPECIFICATION

(11) **EP 0 683 723 B1**
(45) Date of publication and mention of the grant of the patent: **02.09.1998**
(21) Application number: 94908217.6
(22) Date of filing: 11.02.1994
(51) Int. Cl.: B32B 5/18, B60R 21/04

(54) **ENERGY ABSORBING PANEL**
Energieabsorbierende Platte
PANNEAU ABSORBANT L'ENERGIE

(30) Priority: 12.02.1993 US 17492
(43) Date of publication of application: 29.11.1995
(73) Proprietor: WOODBRIDGE FOAM CORPORATION, Mississauga, Ontario L4Z 2G6 (CA)
(72) Inventor: KERMAN, Michael, L., Romeo, MI 28065 (US)
(74) Representative: Weitzel, Wolfgang, Dr.-Ing. Patentanwalt
(86) International application number: CA9400076
(87) International publication number: WO9417995

(56) References cited:
- EP-A- 0 495 188
- WO-A-80/01892
- WO-A-89/02363
- DE-A- 2 029 301
- DE-A- 2 434 175
- GB-A- 1 169 446
- US-A- 3 839 138
- US-A- 4 101 704

## Description

### TECHNICAL FIELD

The present invention relates to an energy absorbing panel.

### BACKGROUND ART

Energy absorbing devices (also known as energy management devices) are known. Such devices can take one of a variety of shapes and forms. Currently, one of the major applications for energy absorbing panels is in use in vehicles, particularly automobiles. Such panels, when used in vehicles, would be of great convenience if they could be included in or substituted for trim panel and, indeed, are commonly referred to as trim panels. Current trim panels are particularly deficient as regards their ability to combine durability with energy absorbing capability.

A common use for energy absorbing panels is in a vehicle instrument panel. An instrument panel typically includes a plastic substrate and a head impact zone. Pursuant to recent governmental guidelines for improved passenger safety, it is now a prerequisite that instrument panels and areas of the interior of the vehicle have an energy management capability.

Heretofore, known instrument panels have comprised the use of a rigid substrate over which is placed a resilient, decorative foam. The foam has an indentation force deflection characteristic of about 1 to 2 pounds per square inch at 25 percent compression of the foam. This amounts to little or no energy absorbing capability for the foam. To make up for this, the substrate must be rigid, typically with a flexural modulus of at least 8,000 MPa. The rigid substrate is usually provided at a thickness of about ⅛ of an inch and is configured to have specific defined impact ones. This is deficient since areas which are not impact ones are insufficient to absorb the energy of impact. Rather, in such areas, the energy of impact tends to deflect away from the rigid substrate. In the case of an instrument panel, this can lead to severe or fatal consequences for a passenger in the vehicle.

The use of foam in an energy absorbing panel is known. Prior panels typically comprise the use of a friable, crushable foam (e.g. rigid polystyrene or rigid polyurethane. In use, this type of foam absorbs the energy from a single impact and, concurrently, crushes. Accordingly, after a single impact, the foam must be replaced.

United States patent 4,508,774 discloses thermoforming compression of polyester-urethane foams. Specifically, this patent discloses cellular polyurethanes having a density of 15-400 kg/m³ and based on aromatic polyisocyanates and polyester polyols. The thermoforming takes place in a forming tool at a compression factor of 1-10 and at a temperature of 140° to 200°C. This patent discloses the use of a starting polyurethane foam slab having a density of 15-40 kg/m³ which is cut to suitable dimensions of the finished article. Thereinafter, the cut slab is thermoformed using conventional techniques. The compression factor for closed molds is defined as the quotient of the density of the final polyurethane foam and the density of the initial polyurethane foam.

The process disclosed in United States patent 4,508,774 is deficient for a number of reasons. Generally, the precess is complicated by having to use pre-manufactured foam. This results in extra steps associated with making and shaping the pre-manufactured foam resulting in stage of trimmed foam. Further, the use of a pre-manufactured foam necessitates the use of a specialized mold to provide the appropriate compression factor and to withstand the conditions of rapid mold closure and specialized temperature control required in the thermoforming operation. Third, the use of a pre-manufactured foam necessitates the use of spray, laminating or hot-melt adhesives to adhere the reinforcing or decorative layer to the pre-formed foam while conducting the thermoforming operation. Fourth, when a fibrous reinforcing layer is used, the process of using an adhesive between the reinforcing layer and the polyurethane foam results in an inferior panel since the adhesive must serve the dual purpose of (i) adhering the reinforcing layer to the foam and (ii) forming a uniform mad for inherent reinforcement of the fibrous reinforcing layer. Fifth, the requirement for a relatively high temperature during the thermoforming operation renders the overall process energy intensive.

In view of the above-mentioned deficiencies of the prior art, it would be desirable to have a relatively simple process for producing an energy absorbing panel which obviates or mitigates at least one of the above-identified deficiencies of the prior art. Ideally, this process could be used to produce an energy absorbing panel having improved properties when compared to known energy absorbing panels.

WO 89/02363 shows impact absorbing composites and their production.

The composite disclosed therein includes a flexible plastic enclosure defining an internal cavity. The flexible enclosure is generally impermeable to air and capable of having its internal pressure changed. The composite further includes a foam core filing the cavity and retained within the cavity and adhered on substantially all of its external surface to the internal surface of the cavity. The cavity can be pressurized by valve for higher impact absorbance. Methods for fabricating the composites are disclosed, as well. These methods include forming the outer enclosure by applying a solution/suspension of the prepolymer of controlled solids content to the core and also can include the step of preheating the core prior to coating it.

### DISCLOSURE OF THE INVENTION

It is an object of the present invention to proride a novel energy absorbing panel.

Related United States patent application S.N. 07/862,172 describes a process for producing an energy absorbing panel having at least one energy absorbing surface in a mold comprising an upper mold and a lower mold, the process comprising the steps of:
(i) placing a reinforcing layer in at least one of the upper mold and the lower mold;
(ii) dispensing a liquid foamable polyurethane composition in the lower mold;
(iii) closing the upper mold and the lower mold to define an enclose corresponding to the shape of the energy absorbing panel; and
(iv) expanding the foamable liquid polyurethane composition to fill substantially the enclosure to produce a resilient polyurethane foam core which adheres to the reinforcing layer thereby providing an energy absorbing surface;
   wherein the reinforcing layer has a tensile strength greater than the tensile strength of the resilient polyurethane foam core and upon compression of the panel at the energy absorbing surface to about 50% by volume of the uncompressed panel in a direction substantially normal to the reinforcing layer, the panel recovers to at least about 90% of volume of the uncompressed panel in less than about 30 minutes.

It has been discovered that the panel produced in accordance with this process possesses improved properties when compared to known energy absorbing panels. More particularly, it has been discovered that the present energy absorbing panel possesses superior properties when compared to the physical properties of the panel produced in accordance with the teachings of United States patent 4,508,774 [Grabhoefer et al. (Grabhoefer)].

In accordance with the aspect of the present invention which forms the subject of the present application, there is provided an energy absorbing panel comprising a resilient polyurethane foam core having a density in the range of from 24 to 384 kilograms per cubic meter (1.5 to 24 pounds per cubic foot) and an indentation force deflection at 25 %, when measured pursuant to ASTM 3574-B₁, in the range of from 667 to 17792 Newtons (150 to 4000 pounds) and two energy absorbing surfaces, each energy absorbing surface comprised of a flexible reinforcing layer covering the resilient polyurethane foam core, the flexible reinforcing layer having a tensile strength greater than the tensile strength of the resilient polyurethane foam core.

Said panel is characterised in that the flexible reinforcing layer of at least one energy absorbing surface is comprised of a fibrous, permeable material and the foam core has been obtained by expanding a foam mass to pass through the fibrous, permeable material.

Upon impact, the panel is capable of absorbing at least 70% of the input energy. Further, upon compression of the panel at the energy absorbing surface to about 50% by volume of the uncompressed panel in a direction substantially normal to the reinforcing layer, the panel recovers to at least 90% of the volume of the uncompressed panel in less than 30 minutes.

It has been discovered that the combination of foam density, foam indentation force deflection (foam IFD), the provision of a reinforcing layer, a resilient foam core and the energy absorbing capability and recoverability of the panel renders the present panel particularly useful in applications which require energy management capabilities. To the Applicant's knowledge, this combination of useful properties in a panel together with the ability of the panel to withstand repeated impacts is unique. One of the important advantages accruing from the invention is the provision of a durable energy absorbing panel capable of withstanding repeated impact substantially without failure.

### BRIEF DESCRIPTION OF THE DRAWINGS

Embodiments of the invention will be described with reference to the accompanying drawings, in which:

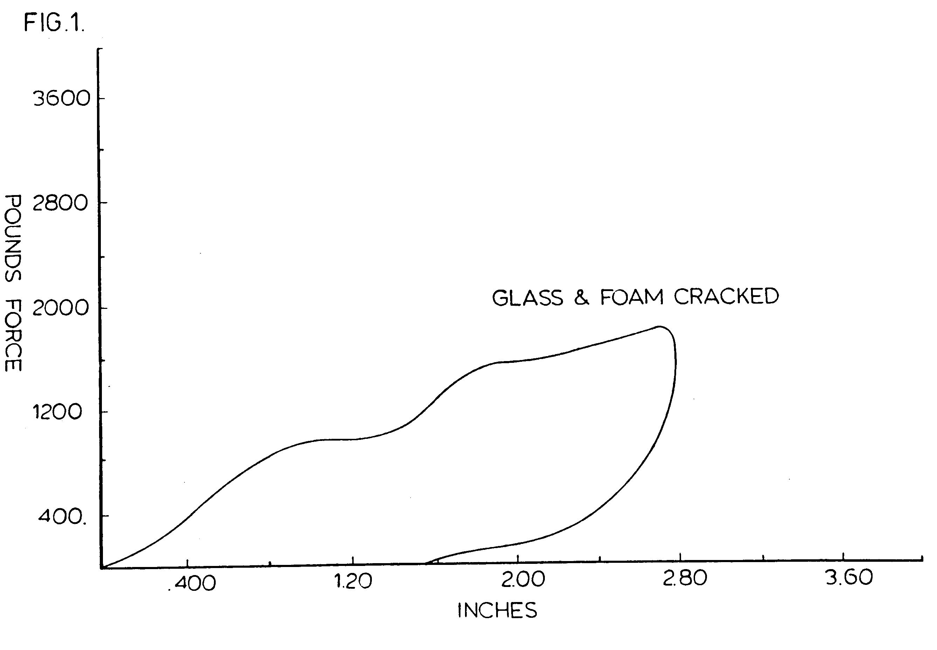

Figures 1-2 are graphical illustrations of results of impact testing of various reinforced panels.

### BEST MODE FOR CARRYING OUT THE INVENTION

The process used to produce the present energy absorbing panel is ideally the one disclosed in related United States patent application S.N. 07/862,172. Accordingly, it will be appreciated by those skilled in the art that the order of the process steps may be varied depending on the exact nature of the process. For example, in certain cases, it may be possible to place the reinforcing layer in the lower mold (or in the upper mold if secured by suitable fastening means), close the upper mold and the lower mold and thereafter inject the liquid foamable polyurethane composition - this is called a "closed mold" pouring technique. Alternatively, the upper mold and lower mold are not closed until the liquid polymeric composition has expanded to about 50, preferably from 50 to 90, more preferably from 60 to 80, most preferably from 70 to 80, percent by volume of the enclosure defined by closing the upper mold and the lower mold - this is called an "open mold" pouring technique. To the Applicants knowledge, the "open mold" and "closed mold" pouring techniques work equally well and the choice of technique used is usually dictated by the nature of the article being produced. Generally, it has been found that the "open mold" pouring technique is most convenient since the mold has to be opened in any event to place therein the flexible reinforcing layers.

It has been surprisingly and unexpectedly discovered that the provision of the present energy absorbing panel obviates the need for a rigid substrate in particular automotive applications such as passenger side air bag doors, knee bolsters, side impact bolsters, A, B and C pillars, sun visor cores and door panels. Many of these devices have heretofore had little or no energy mangement capability. The necessity of such capability has been recently mandated in the United States and other countries. It has also been discovered that the present energy absorbing panel is capable of being subjected to repeated impact since the core is comprised of a relatively resilient polyurethane foam core. These outstanding properties accrue from the energy absorbing panel due to its inherent relatively uniform energy absorbing capability when compared with known panels comprising high resiliency-low energy absorbing foams and low resiliency-high only absorbing substrates. It is believed that the relatively uniform energy absorbing capability of the present energy absorbing panel is due substantially to the interaction, upon impact, between the relatively resilient polyurethane foam core and the reinforcing layer.

The present energy absorbing panel includes two energy absorbing surfaces having a reinforcing layer adhered to and covering at least a portion of the resilient polyurethane foam core. The polyurethane core is disposed between a first energy absorbing surface and a second energy absorbing sure in a spaced, substantially parallel relationship to one another. The provision of two energy absorbing surfaces leads to a dramatic increase in energy absorbing capability when compared to the use of a single energy absorbing surface as will be described hereinafter.

The choice of reinforcing layer used in the present energy absorbing panel is not particularly restricted provided that it has a greater tensile strength than the polyurethane foam core and may be a non-metal or a metal. Preferably, the reinforcing layer is flexible. The flexible reinforcing layer may be fibrous or non-fibrous. Non-limiting examples of fibrous reinforcing layers include at least one member selected from the group consisting essentially of glass fibres (e.g. in the form of a cloth or a mat, chopped or unchopped, such as Nico 754 1 oz/ft²), polyester fibres, polyolefin fibres (e.g. polyethylene and polypropylene), Kevlar fibres, polyamides fibres (e.g. nylon), cellulose fibres (e.g. burlap), carbon fibres, cloth materials such spun bound polyesters (e.g. Lutravil 1DH7210B/LDVT222 and Freudenberg PTLD585G/PTLD600B) and paper (e.g. Kraft #60). It will be appreciated that the fibrous reinforcing layer may be woven or non-woven. Non-limiting examples of a non-fibrous reinforcing layer comprise at least one member selected from the group consisting of thermosets (e.g. polyurethanes, polyesters and epoxies), metals such as aluminum foil, polycarbonates (e.g. Lexan and Dow Calibre), polycarbonate/ABS alloys (e.g. Dow Pulse), ABS terpolymers, (e.g. Royalite 59 and Dow Magnum), polyester terephthalate (PET), vinyl resins, styrene maleic anhydride copolymers (e.g. Arco Dylark), and fibreglass reinforced polypropylene (e.g. Azdel). It will be appreciated that many non-fibrous reinforcing layer materials may themselves be reinforced with fibrous materials and thus, the flexible reinforcing layer may be a combination of fibrous and non-fibrous materials, either mixed or composite in construction.

Preferably, the present energy absorbing panel further comprises a decorative layer to cover at least one surface of the energy absorbing surfaces. The specific choice of decorative layer is not particularly restricted and is usually dictated by application of the energy absorbing panel. A preferred decorative layer comprises a polyethylene or polyvinyl chloride (PVC) foam layer which is thermoformable, closed cell and, when utilized in the preferred process for producing the present energy absorbing panel, permits one-step production of the entire decorative appearing, energy absorbing panel. The decorative layer may placed between the flexible reinforcing layer and either of the upper mold and lower mold, preferably the upper mold. When a decorative layer is disposed between the flexible reinforcing layer and one the molds, it is preferred to use a flexible reinforcing layer which is at least somewhat permeable to the expanding foam mass in the mold. This allows for the expanding foam mass to pass through the flexible reinforcing layer thereby providing a resilient polyurethane foam core which is adhered to both the flexible reinforcing layer and the decorative cover.

After expansion of the liquid foamable polyurethane composition, the polyurethane foam core produced therefrom preferably has a specific gravity of less than 0.40, more preferably in the range of from 0.10 to 0.25. Preferably, the liquid foamable polyurethane composition has a free rise density of from 16 to 320 kilograms per cubic meter (one to twenty pounds per cubic foot) more preferably from 32 to 128 kg per cubic meter (two to eight pounds per cubic foot). For most mold foams, this would give use to a foam core having a density in the range of from 24 to 384 kg/m³ (1.5 to 24 pcf) more preferable from 40 to 192 kg/m³ (2.5 to 12 pcf). In a preferred aspect of the present energy absorbing panel, the polyurethane foam core has an indentation force deflection at 25 % deflection in the range of from 667 to 17792 Newtons (150 to 4,000 pounds), more preferably from 2224 to 11200 Newtons (500 to 2500 pounds), most prefereably from 4003 to 8896 Newtons (900 to 2000 pounds), when measured pursuant to ASTM 3574-B₁.

Upon compression of the present energy absorbing panel at the energy absorbing surface to about 50%, preferably to about 65%, more preferably to about 80%, by volume of the uncompressed panel in a direction substantially normal to the flexible reinforcing layer, the panel recovers to at least 90%, preferably at least 95%, by volume of the uncompressed panel in less than 30 minutes. Preferably, the panel recovers to at least 90% by volume of the uncompressed panel in less than 10 minutes, more preferably less than two minutes.

A particularly preferred embodiment of the present energy absorbing panel comprises the provision of two flexible reinforcing layers. Ideally, in this embodiment, the prefer process comprises placing a flexible reinforcing layer in each of the upper mold and the lower mold. Thereafter, the liquid foamable polyurethane composition may be conveniently dispensed, via an "open pour" or a "closed pour" technique, directly on to the flexible reinforcing layer previously placed in the lower mold. After the liquid foamable polyurethane composition is expanded to provide the resilient polyurethane foam core adhered to each of the flexible reinforcing layers, the preferred energy absorbing panel of the invention results and comprises two energy absorbing surface (i.e. at each flexible reinforcing layer) disposed in a spaced, substantially parallel relationship with respect to one another. The energy absorbing ability of such a panel is dramatically increased when compared to an energy absorbing panel comprising a single energy absorbing surface (i.e. a single flexible reinforcing layer).

The choice of liquid foamable polyurethane composition suitable for use in the present energy absorbing panel is not particularly restricted. Non-limiting and preferred examples of suitable polyurethane foams for use in the present panel are available from Woodbridge Foam Corporation under the tradename Enerflex.

Generally, the polyurethane foam suitable for use in the present panel and having the requisite characteristics may be produced from the following general non-limiting formulation:

| Component | Amount |
|---|---|
| Polymer Polyol | 100 - 0 parts |
| Polyol | 0 - 100 parts |
| Crosslinker | 0 - 30 parts/100 parts total polyol |
| Catalyst | 0.05 to 3.5 parts/100 parts total polyol |
| Silicone Surfactants | 0 - 1.5 parts/100 parts total polyol |
| H₂O | 0.5 to 3.5 parts/100 parts total polyol |
| Isocyanate | Adequate quantity for an index of from about .60 to 1.30 ratio of NCO equivalents to the equivalents of NCO reactive sites |

Suitable polymer polyols, polyols and isocyanates are described in United States patents 3,304,273, 3,383,351, 3,523,093, 3,939,106 and 4,134,610, Belgian patent 788,115, Canadian Patent 785,835 and "Polymer/Polyols, a New Class of Polyurethane Intermediate", Kuryla, W.C. et al., J. Cellular Plastics, March (1966).

Suitable crosslinkers, catalysts and silicone surfactants are described in United States patents 4,107,106 and 4,190,712.

The preferred polyurethane foam suitable for use in the present panel may be produced from the following formulation:

| Component | Amount |
|---|---|
| Polymer Polyol¹ | 20 - 100 parts |
| Polyol² | 0 - 80 parts |
| Crosslinker³ | 5 - 15 parts/100 parts total polyol |
| Catalyst⁴ | 0.5 - 1.2 parts/100 parts total polyol |
| Silicone Surfactants⁵ | 0.3 - 1.1 parts/100 parts total polyol |
| H₂O | 1.75 - 2.75 parts/100 parts total polyol |
| Isocyanate⁶ | Adequate quantity for an index of from about 0.8 to 1.1 ratio of NCO equivalents to the equivalents of NCO reactive sites |

| | |
|---|---|
| ¹ AC West Virginia Polyol Co. NIAX 31-28 | |
| ² 5000 MW propylene oxide adduct of glycerine with 75% primary capping | |
| ³ BASF 953 | |
| ⁴ DABCO R-8020 | |
| ⁵ Goldschmidt B-4113 | |
| ⁶ Dow Chemical Company PAPI 901 | |

It should be noted that the flexible reinforcing layer used in the energy absorbing surface is used on or just beneath (due to impregnation by the expanding foam) the surface of the panel only. In other words, the components of the reinforcing layer are not used as fillers throughout the polyurethane foam core. Using this reinforcement technique an this particular type of resilient polyurethane foam provides surprising and unexpected stiffness and energy absorbing capabilities for the panel.

The present energy absorbing panel is advantageous over the prior art in that it is relatively efficient to produce and has properties superior to known energy absorbing panels.

The energy absorbing panel produced according to the present invention is useful in a variety of applications. The energy absorbing panel has particular vehicular applications such as in door panels, visors, instrument panel topper pads, air bag doors and pillar covers.

The present panel can also he used is applications where unenforced foam are used.

Further, the energy absorbing panel produced according to the present invention can be used in heel blocker pads. As will be appreciated by those skilled in the art, heel blocker pads are located under the carpet and dash insulator in a vehicle against the sheet metal of the dash. These devices serve to protect the bones of the drivers leg from excess loading under the heel of the drivers foot during a front end crash.

The energy absorbing panel produced according to the present invention may also he used in knee bolsters used in vehicles. Typically, knee holsters are used as blockers to prevent the knees of the driver and passenger in the front seat of a vehicle from sliding forward and underneath the instrument panel structure during an impact.

The energy absorbing panel produced according to the present invention may be used as an anti-submarining device in vehicle seats. Generally such devices are incorporated underneath the seat cushion and serve the purpose of preventing the occupant from sliding forward and under the seat restraint during impact.

Embodiments of the present invention will now be illustrated with reference to following Examples, which should not be construed to limit the scope of the invention. In the Examples, unless otherwise indicated, all parts are parts by weight.

### EXAMPLE 1

In the Example, the following materials were used:
- Polyester Polyol 1 -: Commercially available under the tradename RUCO F-207, this polyester polyol has a functionality of 2.45 and hydroxyl number of 58.5, and is prepared by the condensation polymerization of adipic acid with diethylene glycol (DEG) and trimethylolpropane (TMP).
- Polyester Polyol 2 -: Available under the tradename RUCO XF-5472-215, this polyester polyol has a functionality of 3.0 and a hydroxyl number of 227.1, and is prepared by the condensation polymerization of adipic acid, phthalic acid anhydride, 1,3-propylene glycol and TMP.
- Polyester Polyol 3 -: Available from Inolex Chemical under the tradename D-382134-XIN, this polyester polyol has a functionality of 3.8 and a hydroxyl number 345, and is prepared by the condensation polymerization of adipic acid, phthalic acid anhydride, oleic acid and TMP.
- Polyether Polyol 1 -: Commercially available under the tradename DOW XAS 10921.00L, this trifunctional polyether polyol has a hydroxyl number of 35 and is prepared by oxyalkylating glycerine with 1,2-propylene oxide and ethylene oxide in an 85:15 weight ratio.
- Triisopropanolamine -: Commercially available under the tradename DOW Triisopropanolamine 99.
- N,N-Dimethylbenzylamine -: Commercially available under the tradename Zeeland Chemical Sumine 2015.
- Polymeric MDI -: Commercially available under the tradename BASF M20S, this is a mixture comprising approximately 50 parts by weight diphenylmethane diisocyanate and 50 parts by weight polyphenylpolymethylene polyisocyanate, and has an NCO content of 31.8% by weight.
As will be appreciated by those of skill in the art, polyester polyols 1, 2 and 3 above are similar or identical to Grabhoefer's polyester polyols I, II and III, respectively. Similarly, polyether polyol 1 and the polymeric MDI above are similar or identical to Grabhoefer's polyether polyol I and polymeric MDI, respectively.

Essentially, Example 1 of Grabhoefer was repeated and thus, this Example is for comparative purposes only and is outside the scope of the present invention. Specifically, the formulation in Table 1 was blended for ten (10) seconds under agitation provided by a mixer operating at 3,000 rpm and allowed to rise/expand freely in a suitable reaction vessel. The formulation in Table 1 has a similar hydroxyl number and functionality as the formulation disclosed in Grabhoefer Example 1.

The foam produced from the formulation in Table 1 had a core density of 2944 kg/m³ (1.84 lb/ft³).

**Table 1**

| Ingredient | Amount (parts) |
|---|---|
| Polyester Polyol 1 | 40.0 |
| Polyester Polyol 2 | 20.0 |
| Polyester Polyol 3 | 10.0 |
| Polyether Polyol 1 | 30.0 |
| Surfactant¹ | 1.5 |
| Water | 4.0 |
| Triisopropanolamine | 3.2 |
| N,N-Dimethylbenzylamine | 1.7 |
| Polymeric MDI | 97.8 |

| | |
|---|---|
| ¹ Commercially available from Air Products under the tradename DC 197. It was necessary to use a surfactant to produce a stable foam (this was not disclosed in Grabhoefer). | |

To produce the thermoformed samples for impact testing, a block having dimensions 30,5 x 20,3 x 20,3 cm (12" x 8" x 8") was compressed in one dimension in a suitable mold and heated for two hours at 193°C (380°F). The heat-treated, compressed sample was removed from the mold and trimmed, and had dimensions (7½" x 7½" x 4") 19 x 19 x 10 cm The indentation force deflection of the foam at 25% deflection, as determined pursuant to ASTM 3574-B₁, was, found to be 2159 N (485.2 pounds.) In this Example, ASTM 3574-B₁ was modified by (i) using a heat-treated, compressed sample having dimensions 19 x 19 x 4 cm (7½" x 7½" x 4") instead of the dimensions (15" x 15" x ¾"), 7 x 7 x 1,9 cm and (ii) omitting the prescribed 65% preflex step (the foam was much too rigid tor preflex).

The top and bottom surfaces of the heated-treated, compressed samples (i.e. those surfaces having dimension 19 x 19 cm (7½" x 7½") were saturated with a polyurethane adhesive. The reinforcing layer utilized was 21,3 g (¾ ounce) NICO fiberglass mat which was similarly saturate with a polyurethane adhesive. The polyurethane adhesive used was a 1:1 mixture BASF TF 2104 Resin and BASF TF 2100 Isocyanate and had a gel time of five minutes. Adhesion was achieved simply by pressing the fiberglass mat to the surfaces of the foam until the adhesive had cured.

The reinforced sample was then subject to impact testing. Specifically, the sample was mounted in a Defiance EEI Model 4400 Impact Tester (equivalent mass: 69,3 N (15.6 pounds) and thereafter impacted with a five inch diameter hemi-sphere (also known as a kneeform) at an impact velocity of 38,6 km/h (24 mph.) The load (pounds-force) and penetration (inches on a four inch scale) of the hemi-sphere during impact were recorded and the results are illustrated graphically in Figure 1. The actual impact velocity was 38,45 km/h (23.9 mph) and the rebound velocity was 12,71 km/h (7.9 mph.).

Initial impact testing resulted in shattering and thus, complete failure of the sample. Accordingly, impact testing was repeated on a sample whose sides were constrained by an open wood box. During this constrained impact testing, the reinforcing layer/glue combination cracked thereby providing a failed region extending more than half way into the foam. This is undesirable since it is akin to the known single use energy absorbing panels.

### EXAMPLE 2

In this Example, an energy absorbing foam panel in accordance with the present invention was produced. Specifically, a mold was provided comprising an upper mold and a lower mold. Each of the upper and lower molds were lined with the reinforcing layer descried in Example 1 above. Thereafter, the formulation provided in Table 3 was dispensed in lower mold. As the formulation expanded the molds were closed and maintained in this state until expansion and curing of the foam was complete.

**Table 2**

| Ingredient | Amount (parts) |
|---|---|
| Polyol¹ | 100.0 |
| Water | 2.5 |
| Ethylene Glycol | 5.8 |
| Catalyst² | 0.6 |
| Catalyst³ | 0.1 |
| Polymeric MDI⁴ | 75.6 |

| | |
|---|---|
| ¹Commercially available from ARCO under the tradename NIAX 34-28 | |
| ²Commercially available from Air Products under the tradename DABCO 33LV | |
| ³Commercially available from Air Products under the tradename DABCO BL-11 | |
| ⁴Commercially available from ICI under the tradename RUBIFLEX 21A | |

The indentation force deflection of the foam at 25% deflection, as determined pursuant to ASTM 3574-B₁ (modified as described in Example 1 above), was found to be 4320 Newton (971.1 pounds.)

After expension and curing was complete, an energy absorbing panel having dimensions 40,6 x 40,6 x 10 cm (16" x 16" x 4") was produced. This panel was removed from the mold and trimmed to provide a test panel having dimensions 19 x 19 x 10 cm (7½" x 7½" x 4") (the 19 x 19 cm (7½" x 7½") surfaces were reinforced).

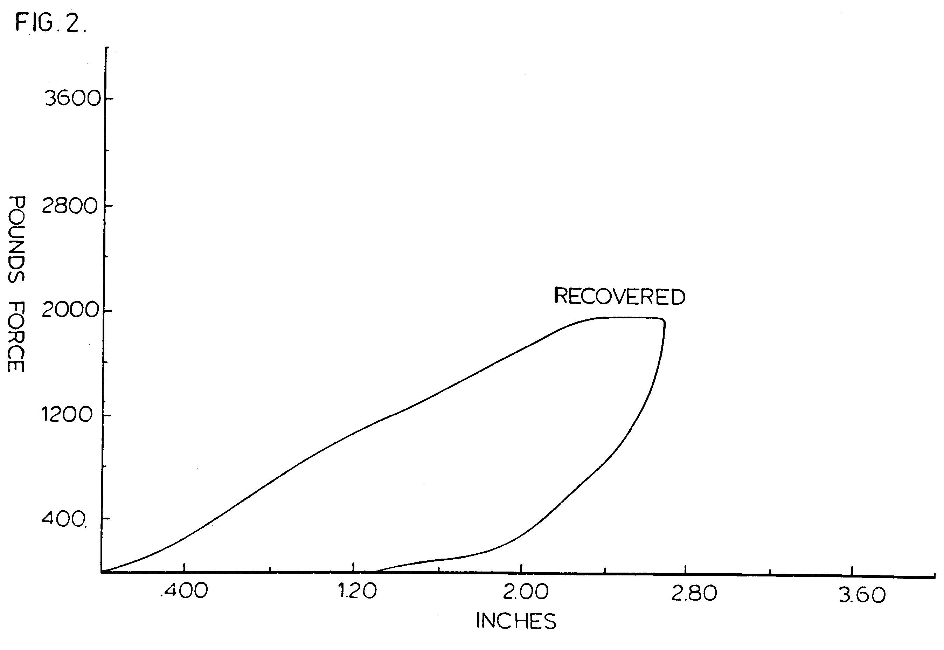

The reinforced panel was then subject to impact testing using the methodology of Example 1 above. The load and penetration during impact were measured and the results are illustrated graphically in Figure 2. The impact velocity was 37,97 km/h (23.6 mph) and the rebound velocity was 16,73 km/h (10.4 mph.) This translate into 80.5% of the input energy being absorbed by the panel. Further, the test panel recovered to more than 95% of its original volume in less than 2 minutes.

As is evident from Figure 2, the panel is capable of bearing a load of less than 5080 (2000) and a penetration of less than 7,62 cm (3 inches.) This translates into superior energy management capabilities. In contrast, this combination of properties could not be achieved in producing the Grabhoefer foam, which failed to some degree upon constrained impact.

It is noteworthy that, in comparing the impact test results for the present panel and the Grabhoefer panel, the former withstood impact without the need for constraining its sides. In contrast, impact test results could only be obtained on a constrained Grabhoefer panel.

## Claims

1. An energy absorbing panel comprising a resilient polyurethane foam core having a density in the range of from 24 to 384 kilograms per cubic meter (1.5 to 24 pounds per cubic foot) and an indentation force deflection at 25%, when measured pursuant to ASTM 3574-B₁, in the range of from 667 to 17792 Newtons (150 to 4000 pounds) and two energy absorbing surfaces, each energy absorbing surface comprised of a flexible reinforcing layer covering the resilient polyurethane foam core, the flexible reinforcing layer having a tensile strength greater than the tensile strength of the resilient polyurethane foam core, characterised in that:
the flexible reinforcing layer of at least one energy absorbing surface is comprised of a fibrous, permeable material; and the foam core has been obtained by expanding a foam mass to pass through the fibrous permeable material.

2. The energy absorbing panel defined in claim 1, wherein said flexible reinforcing layer comprises at least one member selected from the group consisting essentially of glass fibres, polyester fibres, polyolefin fibres, Kevlar fibres, polyamide fibres, cellulose fibres and carbon fibres.

3. The energy absorbing panel defined in any of the preceding claims, further comprising a decorative layer.

4. The energy absorbing panel defined in any of the preceding claims, wherein said polyurethane foam core has a free rise density of from about 40 to about 192 kilograms per cubic meter (about 2.5 to about 12 pounds per cubic foot).

5. The energy absorbing panel defined in any of the preceding claims, wherein the resilient polyurethane core has an indentation force deflection at 25%, when measured pursuant to ASTM 3574-B₁, in the range of from 2224 to 11120 Newtons (N).

6. The energy absorbing panel defined in any of the preceding claims, wherein the resilient polyurethane core has an indentation force deflection at 25%, when measured pursuant to ASTM 3574-B₁, in the range of from 4003 to 8896 Newtons (N).

7. The energy absorbing panel defined in any of the preceding claims wherein the two energy absorbing surfaces are in a spaced, substantially parallel relationship to one another.

8. The energy absorbing panel defined in any of the preceding claims wherein the resilient polyurethane foam core has a density in the range of from 40 to 192 kg/m³.

9. A vehicular trim panel comprising the energy absorbing panel defined in any one of claims 1-8.

10. A vehicular air bag door comprising the energy absorbing panel defined in any of the preceding claims.

## Patentansprüche

1. Energieabsorbierende Tafel umfassend einen elastischen Polyurethanschaumkern mit einer Dichte in dem Bereich von 24 bis 384 Kilogramm pro Kubikzentimeter (1,5 bis 24 Pfund pro Kubikfuß) und einer Druckkraft-Verformung (Indentation Force Deflection) bei 25 %, bei Messung gemäß ASTM 3574-B₁, in dem Bereich von 667 bis 17792 Newton (150 bis 4000 Pfund) und zwei energieabsorbierenden Oberflächen, wobei jede energieabsorbierende Oberfläche eine flexible Verstärkungsschicht, welche den elastischen Polyurethanschaumkern bedeckt, umfaßt, wobei die flexible Verstärkungsschicht eine Zugfestigkeit hat, welche höher als die Zugfestigkeit des elastischen Polyurethanschaumkerns ist,
dadurch gekennzeichnet, daß
die flexible Verstärkungsschicht von wenigstens einer der energieabsorbierenden Oberflächen aus einem fiberhaltigen, permeablen Material zusammengesetzt ist und der Schaumkern durch Expandieren einer Schaummasse derart, daß diese durch das fiberhaltige permeable Material getreten ist, erhalten wurde.

2. Energieabsorbierende Tafel nach Anspruch 1, bei welcher die flexible Verstärkungsschicht wenigstens ein Element umfaßt, welches aus der Gruppe ausgewählt ist, welche im wesentlichen aus Glasfibern, Polyesterfibern, Polyolefinfibern, Keflarfibern, Polyamidfibern, Zellulosefibern und Karbonfibern besteht.

3. Energieabsorbierende Tafel nach einem der vorstehenden Ansprüche, ferner umfassend eine dekorative Schicht.

4. Energieabsorbierende Tafel nach einem der vorstehenden Ansprüche, bei welcher der Polyurethanschaumkern eine freie Anschwelldichte (free Rise Time) von ungefähr 40 bis ungefähr 192 Kilogramm pro Kubikmeter (ungefähr 2,5 bis ungefähr 12 Pfund pro Kubikfuß) hat.

5. Energieabsorbierende Tafel nach einem der vorstehenden Ansprüche, bei welcher der elastische Polyurethanschaumkern eine Druckkraft-Verformung bei
25 %, gemäß Messungen nach ASTM 3574-B₁, in dem Bereich von 2224 bis 11120 Newton (N) hat.

6. Energieabsorbierende Tafel nach einem der vorstehenden Ansprüche, bei welcher der elastische Polyurethanschaumkern eine Druckkraft-Verformung bei
25 %, gemäß Messungen nach ASTM 3574-B₁, in dem Bereich von 4003 bis 8896 Newton (N) hat.

7. Energieabsorbierende Tafel nach einem der vorstehenden Ansprüche, bei welcher die zwei energieabsorbierenden Oberflächen in einem beabstandeten, im wesentlichen parallelen Verhältnis zueinander stehen.

8. Energieabsorbierende Tafel nach einem der vorstehenden Ansprüche, bei welcher der elastische Polyurethanschaumkern eine Dichte in dem Bereich von 40 bis 192 Kilogramm pro Kubikmetern hat.

9. Tafel eines Fahrzeugführerstands umfassend die energieabsorbierende Tafel nach einem der Ansprüche von 1 bis 8.

10. Airbag-Tür eines Fahrzeugs umfassend die energieabsorbierende Tafel nach einem der vorstehenden Ansprüche.

## Revendications

1. Panneau absorbant l'énergie, comprenant un coeur de mousse de polyuréthanne résilient, ayant une masse volumique comprise dans l'intervalle de 24 à 384 kilogrammes par mètre cube (de 1,5 à 24 pounds per cubic foot), et un fléchissement à 25%, sous l'effet d'une force d'indentation, la mesure étant effectuée selon ASTM 3574-B₁, comprise dans l'intervalle de 667 à 17792 Newtons (de 150 à 4000 pounds), et deux surfaces absorbant l'énergie, chaque surface absorbant l'énergie étant constituée d'une couche de renforcement souple recouvrant le coeur de mousse de polyuréthanne résilient, la couche de renforcement souple ayant une résistance à la traction supérieure à la résistance à la traction du coeur de mousse de polyuréthanne résilient, caractérisé en ce que la couche de renforcement souple d'au moins une surface absorbant l'énergie est constituée d'un matériau fibreux et perméable ; et en ce que le coeur de mousse à été obtenu par expansion d'une masse de mousse de façon qu'elle passe à travers le matériau fibreux et perméable.

2. Panneau absorbant l'énergie selon la revendication 1, dans lequel ladite couche de renforcement souple comprend au moins un élément choisi dans le groupe consistant essentiellement en les fibres de verre, les fibres de polyester, les fibres de polyoléfine, les fibres de Kevlar, les fibres de polyamide, les fibres de cellulose et les fibres de carbone.

3. Panneau absorbant l'énergie selon l'une quelconque des revendications précédentes, comprenant en outre une couche décorative.

4. Panneau absorbant l'énergie selon l'une quelconque des revendications précédentes, dans lequel ledit coeur de mousse de polyuréthanne a une masse volumique, après expansion libre, d'environ 40 à environ 192 kilogrammes par mètre cube (d'environ 2,5 à 12 pounds per cubic foot).

5. Panneau absorbant l'énergie selon l'une quelconque des revendications précédentes, dans lequel le coeur de polyuréthanne résilient a un fléchissement à 25%, sous l'effet d'une force d'indentation, la mesure étant effectuée selon ASTM 3574-B₁, compris dans l'intervalle de 2224 à 1120 Newtons (N).

6. Panneau absorbant l'énergie selon l'une quelconque des revendications précédentes, dans lequel le coeur de polyuréthanne résilient a un fléchissement à 25%, sous l'effet d'une force d'indentation, la mesure étant effectuée selon ASTM 3574-B1, compris dans l'intervalle de 4003 à 8896 Newtons (N).

7. Panneau absorbant l'énergie selon l'une quelconque des revendications précédentes, dans lequel les deux surfaces absorbant l'énergie se trouvent à une certaine distance l'une de l'autre et sont essentiellement parallèles l'une à l'autre.

8. Panneau absorbant l'énergie selon l'une quelconque des revendications précédentes, dans lequel le coeur de mousse de polyuréthanne résilient a une masse volumique comprise dans l'intervalle de 40 à 192 kg/m^{3.}

9. Panneau de garniture intérieure d'un véhicule, comprenant le panneau absorbant l'énergie selon l'une quelconque des revendications 1 à 8.

10. Portière de véhicule munie d'un air bag, comprenant le panneau absorbant l'énergie selon l'une quelconque des revendications précédentes.
